# EUROPEAN PATENT SPECIFICATION

(11) **EP 2 390 134 B1**
(45) Date of publication and mention of the grant of the patent: **08.05.2013**
(21) Application number: 11167553.4
(22) Date of filing: 25.05.2011
(51) Int. Cl.: B60Q 1/06

(54) **Device for assembling a spherical joint of a reflector of a vehicle headlamp, improved headlamp comprising said device and vehicle provided with said headlamp**
Vorrichtung zur Montage eines Kugelgelenks eines Fahrzeugscheinwerferreflektors, verbesserter Scheinwerfer mit dieser Vorrichtung und Fahrzeug mit diesem Scheinwerfer
Dispositif d'assemblage d'un joint sphérique de réflecteur d'un phare de véhicule, phare amélioré comportant ce dispositif et véhicule fourni avec ce phare

(30) Priority: 25.05.2010 IT TO20100434
(43) Date of publication of application: 30.11.2011
(73) Proprietor: Automotive Lighting Italia S.p.A., 10078 Venaria Reale (Torino) (IT)
(72) Inventor: Cubito, Luciano, 10135 Torino (IT); Mazzucato, Simone, 10093 Collegno (IT)
(74) Representative: Jorio, Paolo

(56) References cited:
- EP-A1- 0 430 814
- DE-A1- 19 960 528
- US-B1- 6 692 176

## Description

The present invention relates to an assembly device for a spherical joint of a reflector of a vehicle headlamp. The invention is also relative to an improved headlamp provided with said device for supporting the reflector on the headlamp body and a vehicle provided with said headlamp.

Motor vehicle headlamps generally comprise a cup-shaped body closed at the front by a clear or prismed lens, and housing on its interior a reflector for the light source, which is supported tilting by the headlamp body by a three stems suspension system, each of which is equipped with a spherical joint and at least one of which is axially movable by way of an adjusting device. The spherical joint through which each stem is constrained to the reflector, comprises a spherical head carried by the stem and an elastically deformable block, typically made of synthetic plastic material, defining within its interior a spherical seat to snappingly receive the spherical head of the stem.

Today, partly because of the ever more complex reflector shapes, the blocks of the spherical joints are not obtained in one piece with the reflector, but they are separate elements, secured in the rear of the reflector by way of linking elements, such as screws. In order to assemble the blocks, therefore, the reflector must be provided with feet defined by sleeves obtained integrally in one piece with the reflector upon which blocks are assembled laterally overhanging, an assembly on the axis of the spherical seat of the block with respective feet is of course hindered by the need to leave the fixing screw uncovered or otherwise easily accessible.

This results on one hand in large assembly device dimensions of each spherical joint, and on the other hand relatively high construction and assembly costs of the assembly device. In addition, the screws can loosen in time, causing misalignment of the reflector. US6692176, DE19960528 and EP0430814 do not solve these problems.
It is therefore an aim of the invention to overcome these drawbacks by providing a space-saving assembly device for a support spherical joint for the reflector of a vehicle headlamp, of easy and economical production and assembly and that is not subject to loosening in use.

The invention is thus related to a device for assembling a spherical joint for a reflector of a vehicle headlamp as defined in claim 1.

The invention is also related to a vehicle headlamp provided with said assembly device, as defined in claim 9, and a vehicle as defined in claim 10.

In particular, the assembly device according to the invention comprises a tubular shank obtained in one piece with the block and which overhangingly extends therefrom, in the direction of an axis for introducing the spherical head in the spherical seat and from the opposite side to the seat; the tubular shank is formed by at least one pair of fins, which are elastically deformable in a radial direction to the introduction axis; the device of the invention, also comprises, in combination, a reception seat for the shank, which is obtained in one piece with the reflector; and a pin, that is shaped so as to be adapted for selectively taking a first position, in which the pin is aligned with the shank at a mouth thereof facing on the side of the spherical seat and is connected in one piece to the block through a cuttable diaphragm, and a second position in which the pin is at least partially driven into the tubular shank and interferes with the elastically deformable fins to such an extent that, when the shank is inserted in the reception seat, the fins, in turn, interfere with a sidewall of the reception seat.

According to a preferred embodiment of the invention, the tubular shank and the pin are directly carried by the block, axially aligned with each other and both arranged to be coaxial with the spherical seat so that the interior of the tubular shank directly communicates with the spherical seat, in a position immediately underlying it, by way of said mouth, and so that at least part of the pin, in the first position of the latter, is housed within said first spherical seat so as to protrude axially therein.

According to a further aspect of the invention, the cuttable diaphragm consists of at least one thinned portion and, therefore of reduced thickness, of a bottom wall of the spherical seat.

In this way, the assembly device is relatively low cost, quickly assembled and highly reliable, being risk-free of the typical loosening of threaded joints. The pin, once the cuttable diaphragm is cut due to the introduction of the spherical head of the stem in its spherical seat in the block, it behaves like the well-known connecting element called "prisoner", but that is usually made of a full section metal threaded shank that is interferingly driven into a hole in a metal sheet or plate. It therefore holds the fins forming the elastically deformable shank of the block pressed against the sidewall of the reception seat, preventing any accidental removal or loosening of the connection between the headlamp body and the headlamp.

Additional features and advantages of the invention will appear clear from the following description by no means limitative and merely explicative of an embodiment thereof, described in reference to the attached figures of the drawings in which:
- Figure 1 schematically illustrates a plan view from above, illustrated in longitudinal section, of a front headlamp of a known vehicle of which is shown only part of the profile, having the reflector attached to the headlamp by means of an assembly device produced according to the invention, which is illustrated in a working position;
- Figure 2 illustrates in an enlarged scale a detail in a longitudinal sectional view of the assembly device of Figure 1;
- Figure 3 illustrates schematically and in longitudinal section the assembly device for the reflector of the headlamp of Figure 1 in three different steps a), b) and c) of its assembly, and
- Figure 4 illustrates schematically and in longitudinal section a variant of the assembly device for the reflector of the headlamp of Figure 1.

With reference to Figures from 1 to 3, indicated as a whole with 1 is an assembly device of a spherical joint 2 for a reflector 3 of a front headlamp 4 for a vehicle 5 of any known type, in which is illustrated for simplicity only part of the front profile thereof.

In particular, the vehicle headlamp 4 comprises a headlamp body 6 substantially cup-shaped and closed at the front by a clear or prismed lens 7, a light source 8, for example an incandescent bulb, halogen or a gas-discharge lamp or a LED, and the reflector 3, which serves to channel the light rays emitted from the source 8 towards the lens 7 according to a predetermined photometric distribution. The reflector 3 for the light source 8 is arranged inside of the headlamp 6 and is supported by the latter by at least three spherical joints 2, according to a known scheme, of which only one is shown for simplicity, out of scale.

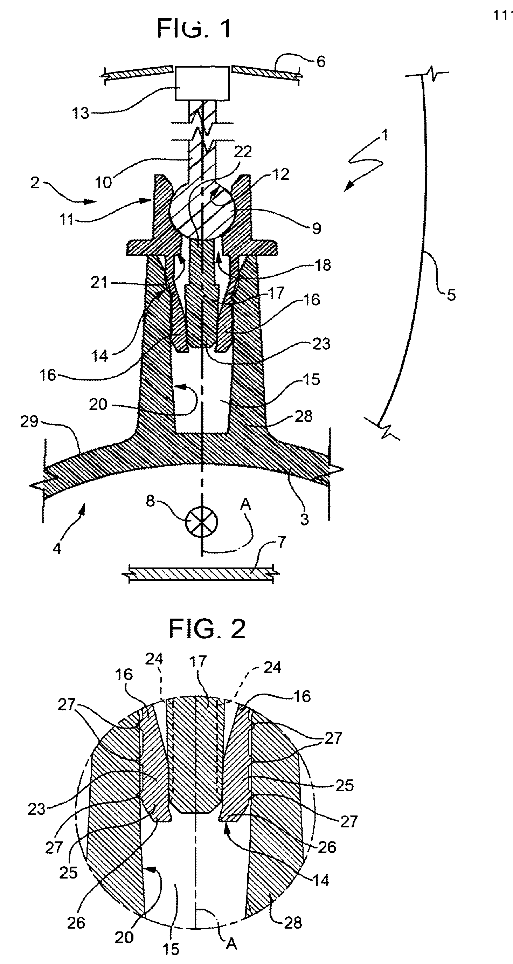

Each joint or spherical joint 2 comprises a spherical head 9 securable to the headlamp body, in this case self-carried by the headlamp body 6 by way of a respective stem 10 and a block 11 integrally carried by the reflector 3 and internally provided with a spherical seat 12 adapted to snappingly engage, in use, the spherical head 9. In the case illustrated in Figure 1, the shown spherical joint 2, is the one supported on the headlamp body 6 by a stem 10 axially movable, along an axis A, by a known adjusting device 13, schematically shown with a block.

The block 11, in the complex of known structure, defines the spherical seat 12 via at least one pair of elastically deformable sectors 12b detached on the block 11 by respective known slits and not shown for simplicity.

According to the main aspect of the invention, the blocks 11 of all the spherical joints 2 are made as separate items from the reflector 3, but securable to the latter as will be seen; in this case the blocks 11 are secured to the reflector 3 each by a respective assembly device 1.

Each assembly device 1 comprises, in combination, a tubular shank 14 obtained in one piece with the respective block 11 and which overhangingly extends therefrom, in the direction of an axis for introducing the spherical head 9 into the spherical seat 12, in the case illustrated formed by the axis A; and a seat 15 for receiving the shank 14 obtained in one piece with the reflector 3; in particular, the tubular shank 14 extends from the block 11 from the opposite side of the spherical seat 12 and is formed by at least a couple of fins 16 which are elastically deformable in a direction radial to the introduction axis A.

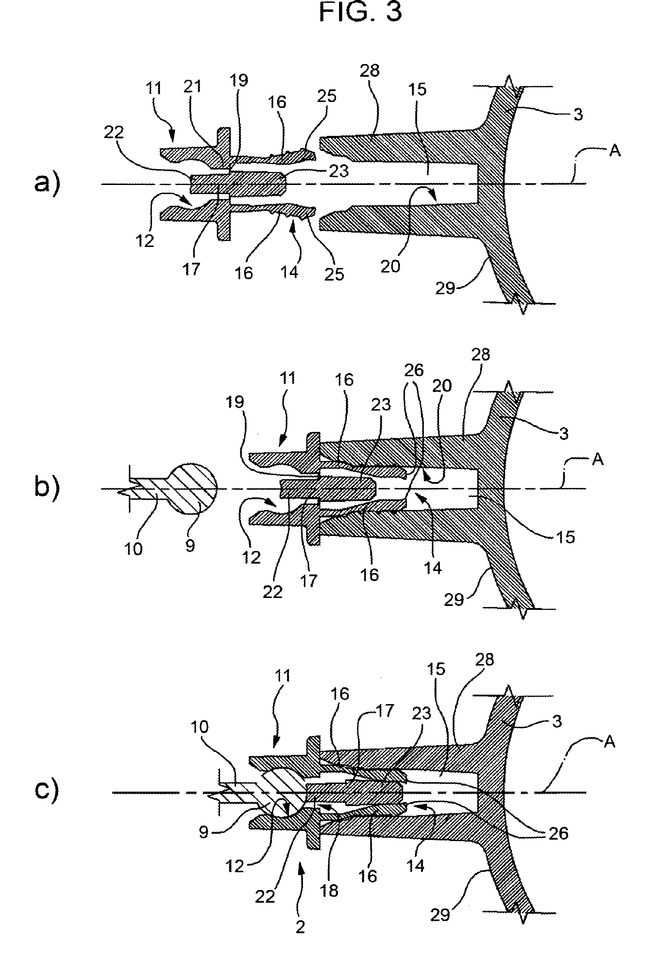

According to the main aspect of the invention, the device 1 further comprises a pin 17 adapted to selectively assume two different operating positions. In a first position, illustrated in figure 3a, the pin 17 is aligned with the shank 14 at a mouth or inlet opening 18 (Figure 1) thereof facing the spherical seat 12 and is connected in one piece to the block 11 through a cuttable diaphragm 19 (Figures 3a and 3b). In a second position, illustrated in Figures 1 and 3c, the pin 17 is instead at least partially driven within the tubular shank 14 and interferes with the elastically deformable fins 16 to such an extent that, when the shank 14 is inserted in the reception seat 15 of the reflector 3, the fins 16 interfere with a sidewall 20 of the reception seat 15.

According to a further but not secondary aspect of the invention, the tubular shank 14 and the pin 17 are directly carried by the block 11, axially aligned with each other and both arranged coaxially with the spherical seat 12 and the stem 10, along the axis A, so that the interior of the tubular shank 14 directly communicates with the spherical seat 12, in a position immediately beneath the same, through the mouth 18, and so that at least part of the pin 17, in the first position of the latter (Figures 3a and 3b), is axially overhangingly housed within the spherical seat 12.

In addition, the cuttable diaphragm 19 consists of at least one thinned portion, therefore, of reduced thickness, of a bottom wall 21 (Figure 1) of the spherical seat 12.

The pin 17 has a first end portion 22 adapted to cooperate with the spherical head 9 when the latter is snappingly introduced in the spherical seat 12 and a second end portion 23, opposite to the first end portion 22 and transversally larger in size than the first portion 22, adapted to cooperate in the second pin position, with the elastically deformable fins 16 of the tubular shank 14, from the interior of the latter, to press them against the sidewall 20 of the reception seat 15 of the shank 14. The cuttable diaphragm 19 is obtained in one piece with the pin 17, between the end portions 22 and 23 thereof.

In addition, the second end portion 23 of the pin 17 (Figure 2) is provided laterally on the outside of the pin 17, i.e. towards the fins 16 of the tubular shank 14, with the respective longitudinal ribs 24, shown with dotted lines.

The elastically deformable fins 16 forming the tubular shank are shaped so that, with the fins 16 not deformed, they have respective ends 25 overhangingly diverging from one another (Figure 3a), so that the dimensions of the tubular shank 14 are, at least for part of its length, larger than the one of the reception seat 15 carried by the reflector 3.

In addition, the elastically deformable fins 16 forming the tubular shank have their respective overhanging ends 25 radially provided on the interior of the tubular shank 14 of respective stop teeth 26 for the pin 17 (Figure 2), which are adapted to axially abut against the same when the pin 17 is in the second operational position of Figures 1 and 3c.

Finally, the elastically deformable fins 16 are radially provided on the exterior of the tubular shank 14, of protruding elements 27 adapted to be anchored in use to the sidewall 20 of the reception seat 15 carried by the reflector 3.

In particular, the reception seat 15 for the tubular shank 14 is defined by a sleeve 28 carried by a rear wall 29 of the reflector 3, so as to protrude; also, the fins 16 of the tubular shank 14 are made of a harder material than the material of the sleeve 28. Typically, both elements, i.e. the sleeve 28 and the shank 14 are made of a molded synthetic plastic material, as well as the block 11 and the pin 17.

In use, the block 11 of each spherical joint 2 is obtained in one piece with the shank 14 and the pin 17, as shown in figure 3a. Successively, the shank 14 is inserted in the seat 15 (Figure 3b), which produces the partial bending of the fins 16 towards the axis A; the latter elastically respond, exerting pressure against the wall 20, thus maintaining the block 11 locked on the reflector 3 by friction.

Still successively, during the assembly of the headlamp 4, the spherical heads 9 are to be introduced into the seats 12 of blocks 11 forming spherical joints 2; in so doing, however, the spherical head 9, by being introduced in the seat 12 already in part occupied by the end 22 of the pin 17, goes to intercept the latter, pushing the pin 17 towards the shank 14; the thrust, equivalently to the normal one of the snapping introduction of the head 9 in the seat 12, is such that the diaphragm 19, which is extremely weak, is cut, therefore allowing the head 9 and the respective stem 10 to push the pin 17 almost entirely within the shank 14; the portion 23 of the pin 17 then moves to abut against the teeth 26 and is driven in interference, also due to the influence of the rib 24, between the fins 16. These, in turn, are pushed even more against the wall 20, interfering with the same, so as to drive and anchor the protruding elements 27 in/to the sleeve 28; the interferences are absorbed by the material elasticity, after the full recovery of all possible slack.

Under these conditions, the pin 17 results driven in interference in the shank 14 and the latter is driven in interference in the seat 15, thus anchoring the block 11 to the reflector 3 as if it had been obtained in one piece with the same, all without the use of screws or other threaded elements and in a quick way, basically executing the same assembly procedure of the spherical joints 2.

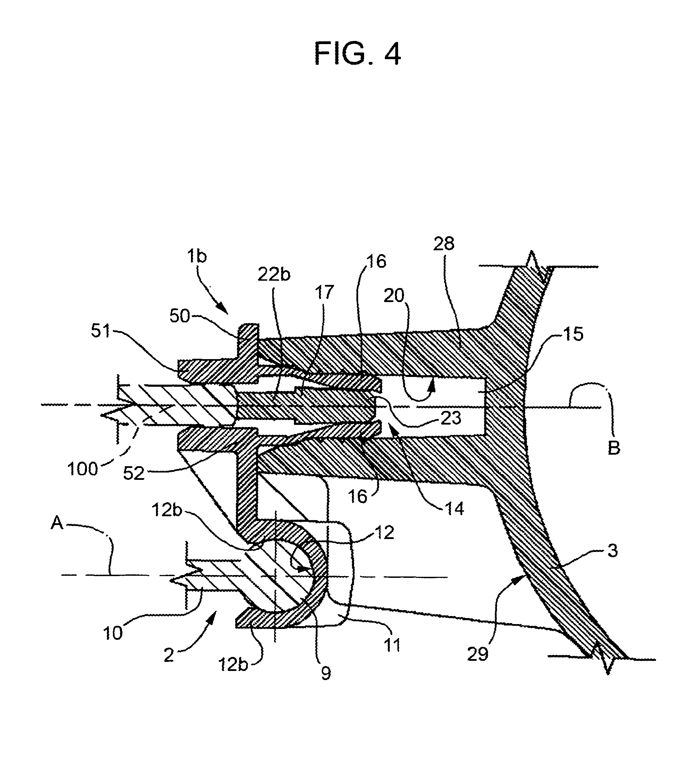

With reference now to Figure 4, where the similar or identical details to those already described are indicated with the same numbers for simplicity, is illustrated a variation 1b of the assembly device according to the invention.

Practically, the device 1b is substantially similar to device 1, also comprising a shank 14 consisting of at least a pair of elastically deformable fins 16, within which a pin 17 is introducible in use, having a thickened end 23 adapted for expanding the fins 16. The shank 14, similarly to the device 1, is introducible in the seat 15 of the sleeve 28, integral with the reflector 3.

The difference is that while in the device 1 pin 17 and shank 14 are aligned with the spherical seat 12 along the axis A, in the device 1b the pin 17 and the shank 14 are aligned with each other, but along an axis B parallel to axis A and laterally placed with respect to the seat 12. In particular, they are carried by means of a bracket 50 integrally carried in one piece by the block 11, laterally overhanging therefrom, laterally to the spherical seat 12; the bracket 50 is provided with a sleeve 51 facing the side of the concavity of the seat 12, i.e. on the opposite side of the shank 14, which axially protrudes overhangingly from the bracket 50; the interior of the shank 14 is connected to the inside of the sleeve 51 through a bottom wall 52 of the sleeve 51 integral to the bracket 50 and crossed by the pin 17, which is connected to the bracket 50 via athinned portion of the bottom wall 52, not shown for simplicity, that forms an easily cuttable diaphragm completely similar to the diaphragm 19.

Within the sleeve 51 protrudes, in the first position of the pin 17, one end 22b of the pin 17, while the end 23 is partially inserted in the shank 14.

Also in this case, the block 11 is integrally assembled to the reflector 3 forcibly driving the shank 14 within the seat 15, while the pin 17 remains in the first position. Successively, it is necessary to insert, as previously described, the pin 17 almost completely within the shank 14, bringing it to the second position, previously breaking the portion of the wall 52 defining the aforementioned cuttable diaphragm.

This is accomplished, in the device 1b, by means of a tool 100 that is introduced into the sleeve 51, which thus acts as a guide element of the tool 100; eventually, if the sleeve 51 is wide enough, i.e. if the spherical head 9 is sufficiently small, said procedure can be executed by using said shaft 10 as a tool.

In any case, at the end, it will be obtained also in this case the driving in interference of the pin 17 in the shank 14 and of the fins 16 of the latter in the seat 15, of the block 11 to the reflector 3, except that in this case the block 11 with the seat 12 results positioned laterally overhanging with respect to the sleeve 28, protruding from the rear end thereof.

## Claims

1. A device (1) for assembling a spherical joint (2) of a reflector (3) of a vehicle headlamp (4), comprising a spherical joint with a spherical head (9) carried by a stem (10) and securable by the same to a headlamp body (5) and a spherical seat (12) defined by an elastically deformable block (11) securable to a reflector (3) arranged within the headlamp body (5), the spherical seat (12) being adapted to snappingly receive in use the spherical head (9); wherein the assembly device (1) comprises, in combination: a tubular shank (14) obtained in one piece with the block (11) and which overhangingly extends therefrom, on the side opposite to the seat (12), in the direction of an axis (A) for introducing the spherical head into the spherical seat, the tubular shank (14) being formed by at least one pair of fins (16) elastically deformable in a direction radial to the introduction axis (A); a reception seat (15) for the shank (14) obtained in one piece with the reflector (3); and a pin (17) adapted to selectively take a first position, in which it is aligned with the shank (14) at a mouth (18) thereof facing on the side of the spherical seat (12) and is connected in one piece to the block (11) through a cuttable diaphragm (19), and a second position in which it is at least partially driven into the tubular shank (14); **characterized in that**, in combination:
i)- said reception seat (15) for the tubular shank (14) is defined by a sleeve (28) carried by a rear wall (29) of said reflector (3) so as to protrude;
ii)- said elastically deformable fins (16) are radially provided, on the exterior of the tubular shank (14), with protruding elements (27) adapted to be anchored in use to a sidewall (20) of said reception seat (15) carried by the reflector (3);
iii)- said sleeve (28) and said shank (14) are made of a moulded synthetic plastic material, as well as said pin (17) and block (11), said fins (16) of the tubular shank being made of a harder material than the material of said sleeve (28);
iv)- said pin (17) has a first end portion (22) and a second end portion (23), opposite to the first and transversally larger in size than the first portion, adapted to cooperate, in said second position of the pin, with said elastically deformable fins (16) of said tubular shank, from the interior of the latter;
v)- said second end portion (23) of the pin (17) is provided laterally on the outside of the pin, i.e. towards said fins of the tubular shank, with respective longitudinal ribs (24);
vi)- in said second position of the pin, said pin (17) interferes with the elastically deformable fins (16) to such an extent that, when the shank is inserted in the reception seat (15), the fins (16) interfere with the sidewall (20) of the reception seat (15) so that said second end portion (23) of the pin press them against the sidewall (20) of the reception seat (15) of the shank to such an extent that said protruding elements (27) of the fins (16) are radially anchored in use to the sidewall (20) of the reception seat (15).

2. A device according to claim 1, **characterized in that** said tubular shank (14) and said pin (17) are directly carried by the block (11), axially aligned with each other and both arranged to be coaxial with said spherical seat (12) so that the interior of said tubular shank (14) directly communicates with said spherical seat (12), in a position immediately underlying it, by means of said mouth (18), and so that at least part (22) of said pin (17), in the first position of the latter, is housed within said first spherical seat (12) so as to protrude axially therein.

3. A device according to claim 1 or 2, **characterized in that** said cuttable diaphragm (19) consists of at least one thinned portion, therefore of reduced thickness, of a bottom wall (21) of said spherical seat (12).

4. A device according to claim 2 or 3, **characterized in that** said pin (17) has the first end portion (22) adapted to cooperate with said spherical head (9) when the latter is snappingly introduced into said spherical seat (12).

5. A device according to claim 4, **characterized in that** said cuttable diaphragm (19) is obtained in one piece with said pin (17), between said first and second end portions (22;23) thereof.

6. A device according to any one of the preceding claims, **characterized in that** said elastically deformable fins (16) forming said tubular shank are shaped so that, with the fins not deformed, they have respective ends (25) overhangingly diverging from one another so that the transversal dimensions of said tubular shank (14) are, at least for part of the length of the shank, larger than those of the reception seat (15) carried by the reflector.

7. A device according to any one of the preceding claims, **characterized in that** said elastically deformable fins (16) forming said tubular shank have their respective overhanging ends (25) radially provided on the interior of the tubular shank of respective stop teeth (26) for said pin (17), which are adapted to axially abut against the same when the pin is in said second position.

8. A device according to claim 1, **characterized in that** said tubular shank (14) and said pin (17) are carried by the block (11) laterally overhangingly therefrom, axially aligned with each other parallelly to a symmetry axis (A) of the spherical seat (12), by means of a bracket (50) laterally obtained in one piece with the block (11) so as to protrude therefrom.

9. A headlamp (4) for vehicles comprising a headlamp body (5) substantially cup-shaped and closed at the front by a clear or prismed lens (7), a light source (8) and a reflector (3) for the light source arranged inside the headlamp body and supported by the latter through at least three spherical joints (2), each comprising a spherical head (9) carried by the headlight body (5) through a respective stem (10), and a block (11) integrally carried by the reflector (3) and provided with a spherical seat (12) therein, adapted to snappingly engage in use the spherical head (9); **characterized in that** the blocks (11) of said spherical joints (2) are made as elements which are distinct from the reflector (3) and are integrally secured to the latter by means of an assembly device (1) according to any one of the preceding claims.

10. A vehicle (5) provided with at least one headlamp (4) according to claim 9.

## Patentansprüche

1. Vorrichtung (1) zur Montage eines Kugelgelenks (2) eines Reflektors (3) eines Fahrzeugscheinwerfers (4), umfassend ein Kugelgelenk mit einem Kugelkopf (9), der von einem Schaft (10) getragen wird und mittels diesem an einem Scheinwerferkörper (5) befestigbar ist, und einen Kugelsitz (12), der durch einen elastisch verformbaren Block (11) gebildet ist, der an einem innerhalb des Scheinwerferkörpers (5) angeordneten Reflektor (3) befestigbar ist, wobei der Kugelsitz (12) dafür ausgelegt ist, in Benutzung den Kugelkopf (9) in einer Einschnappverbindung aufzunehmen; wobei die Montagevorrichtung (1) in Kombination enthält: einen rohrförmigen Schaft (14), der in einem Stück mit dem Block (11) erhalten wird und der von diesem an der dem Sitz (12) entgegengesetzten Seite in der Richtung einer Achse (A) überhängend verläuft, um den Kugelkopf in den Kugelsitz einzuführen, wobei der rohrförmige Schaft (14) durch mindestens ein Paar Zungen (16) gebildet ist, die in einer zu der Einführachse (A) radialen Richtung elastisch verformbar sind; einen Aufnahmesitz (15) für den Schaft (14), der in einem Stück mit dem Reflektor (3) gebildet ist; und einen Stift (17), der dafür ausgelegt ist, selektiv eine erste Position, in welcher er mit dem Schaft (14) an einer Öffnung (18) desselben zu der Seite des Kugelsitzes (12) weisend ausgerichtet ist und durch eine durchtrennbare Membran (19) einstückig mit dem Block (11) verbunden ist, und eine zweite Position, in welcher er zumindest teilweise in den rohrförmigen Schaft (14) eingetrieben ist, einzunehmen; **dadurch gekennzeichnet, dass**, in Kombination:
i) - der Aufnahmesitz (15) für den rohrförmigen Schaft (14) durch eine Buchse (28) gebildet ist, die von einer Rückwand (29) des Reflektors (3) in vorspringender Weise getragen wird;
ii) - die elastisch verformbaren Zungen (16) an der Außenseite des rohrförmigen Schafts (14) radial mit vorspringenden Elementen (27) versehen sind, die dafür ausgelegt sind, in Benutzung an einer Seitenwand (20) des von dem Reflektor (3) getragenen Aufnahmesitzes (15) verankert zu werden;
iii) - die Buchse (28) und der Schaft (14) ebenso wie der Stift (17) und der Block (11) aus einem geformten Kunststoffmaterial hergestellt sind, wobei die Zungen (16) des rohrförmigen Schafts aus einem härteren Material als das Material der Buchse (28) hergestellt sind;
iv) - der Stift (17) einen ersten Endabschnitt (22) und einen zweiten Endabschnitt (23) hat, der dem ersten entgegengesetzt ist und in Querrichtung größer ist als der erste Abschnitt, der dafür ausgelegt ist, in der zweiten Position des Stifts mit den elastisch verformbaren Zungen (16) des rohrförmigen Schafts vom Inneren des Letzteren zusammenzuwirken;
v) - der zweite Endabschnitt (23) des Stifts (17) seitlich an der Außenseite des Stifts, d.h. in Richtung der Zungen des rohrförmigen Schafts, mit jeweiligen Längsrippen (24) versehen ist;
vi) - in der zweiten Position des Stifts der Stift (17) auf die elastisch verformbaren Zungen (16) in einem Ausmaß einwirkt, dass dann, wenn der Schaft in den Aufnahmesitz (15) eingesetzt wird, die Zungen (16) auf die Seitenwand (20) des Aufnahmesitzes (15) dergestalt einwirken, dass der zweite Endabschnitt (23) des Stifts diese in einem solchen Ausmaß gegen die Seitenwand (20) des Aufnahmesitzes (15) des Schafts drückt, dass die vorspringenden Elemente (27) der Zungen (16) in Benutzung an der Seitenwand (20) des Aufnahmesitzes (15) radial verankert sind.

2. Vorrichtung nach Anspruch 1, **dadurch gekennzeichnet, dass** der rohrförmige Schaft (14) und der Stift (17) axial zueinander ausgerichtet und beide koaxial mit dem Kugelsitz (12) angeordnet direkt von dem Block (11) getragen werden, so dass das Innere des rohrförmigen Schafts (14) mittels der Öffnung (18) in direkter Verbindung mit dem Kugelsitz (12) in einer unmittelbar darunter liegenden Position steht, und so, dass mindestens ein Teil (23) des Stifts (17) in der ersten Position des Letzteren innerhalb des ersten Kugelsitzes (12) dergestalt aufgenommen ist, dass er darin axial vorspringt.

3. Vorrichtung nach Anspruch 1 oder 2, **dadurch gekennzeichnet, dass** die durchtrennbare Membran aus mindestens einem verdünnten Abschnitt, somit mit reduzierter Dicke, einer Bodenwand (21) des Kugelsitzes (12) besteht.

4. Vorrichtung nach Anspruch 2 oder 3, **dadurch gekennzeichnet, dass** der Stift (17) einen ersten Endabschnitt (22) hat, der zur Zusammenwirkung mit dem Kugelkopf (9) ausgelegt ist, wenn der Letztere einschnappend in den Kugelsitz (12) eingesetzt wird.

5. Vorrichtung nach Anspruch 4, **dadurch gekennzeichnet, dass** die durchtrennbare Membran (19) in einem Stück mit dem Stift (17) zwischen dessen erstem und zweitem Endabschnitt (23; 23) erhalten wird.

6. Vorrichtung nach einem der vorhergehenden Ansprüche, **dadurch gekennzeichnet, dass** die elastisch verformbaren Zungen (16), die den rohrförmigen Schaft bilden, so geformt sind, dass dann, wenn die Zungen nicht verformt sind, ihre jeweiligen Enden (25) überhängend auseinanderlaufen, so dass die Querabmessungen des rohrförmigen Schafts (14) zumindest für einen Teil der Länge des Schafts größer sind als diejenigen des von dem Reflektor getragenen Aufnahmesitzes (15).

7. Vorrichtung nach einem der vorhergehenden Ansprüche, **dadurch gekennzeichnet, dass** die den rohrförmigen Schaft bildenden elastisch verformbaren Zungen (16) ihre jeweiligen überhängenden Enden (25) an der Innenseite des rohrförmigen Schafts von jeweiligen Anschlagzacken (26) für den Stift (17) radial vorgesehen aufweisen, welche dafür vorgesehen sind, an diesem anzuliegen, wenn der Stift in der zweiten Position ist.

8. Vorrichtung nach Anspruch 1, **dadurch gekennzeichnet, dass** der rohrförmige Schaft (14) und der Stift (17) von dem Block (11) von diesem seitlich überhängend, zueinander axial parallel zu einer Symmetrieachse (A) des Kugelsitzes (12) ausgerichtet mittels eines Bügels (50) getragen werden, der in einem Stück mit dem Block (11) seitlich von diesem vorspringend erhalten wird.

9. Scheinwerfer (4) für Fahrzeuge, umfassend einen Scheinwerferkörper (5), der im Wesentlichen becherförmig ist und an der Vorderseite durch ein klares oder mit Prismen versehenes Glas (7) verschlossen ist, eine Lichtquelle (8) und einen Reflektor (3) für die Lichtquelle, der innerhalb des Scheinwerferkörpers angeordnet ist und von diesem durch mindestens drei Kugelgelenke (2) gehalten werden, von denen jedes einen von dem Scheinwerferkörper (5) durch einen jeweiligen Schaft (10) getragenen Kugelkopf (9) und einen Block (11) aufweist, der integriert von dem Reflektor (3) getragen wird und mit einem Kugelsitz (12) darin versehen ist, der dafür ausgelegt ist, in Benutzung mit dem Kugelkopf (9) einschnappend in Eingriff zu kommen; **dadurch gekennzeichnet, dass** die Blöcke (11) der Kugelgelenke (2) als Elemente hergestellt sind, die von dem Reflektor (3) verschieden sind und an dem Letzteren mittels einer Montagevorrichtung (1) nach einem der vorhergehenden Ansprüche integral befestigt sind.

10. Fahrzeug (5), versehen mit mindestens einem Scheinwerfer (4) nach Anspruch 9.

## Revendications

1. Dispositif (1) pour assembler un joint sphérique (2) d'un réflecteur (3) d'un phare de véhicule (4), comprenant un joint sphérique avec une tête sphérique (9) supportée par une tige (10) et qui peut être fixée par la susdite à un corps de phare (5) et un siège sphérique (12) défini par un bloc (11) déformable élastiquement qui peut être fixé à un réflecteur (3) agencé dans le corps de phare (5), le siège sphérique (12) étant conçu pour recevoir par pression en utilisation la tête sphérique (9) ; dans lequel le dispositif d'assemblage (1) comprend, en combinaison :
une queue tubulaire (14) obtenue en une seule pièce avec le bloc (11) et qui s'étend en porte à faux de celui-ci, du côté opposé au siège (12), dans la direction d'un axe (A) pour introduire la tête sphérique dans le siège sphérique, la queue tubulaire (14) étant formée par au moins une paire d'ailettes déformables élastiquement (16) dans une direction radiale à l'axe d'introduction (A) ; un siège de réception (15) pour la queue (14) obtenu en une seule pièce avec le réflecteur (3) ; et
une broche (17) conçue pour adopter de manière sélective une première position, dans laquelle elle est alignée avec la queue (14) au niveau d'une ouverture (18) de celle-ci qui fait face au côté du siège sphérique (12) et dans laquelle elle est reliée en une seule pièce au bloc (11) par l'intermédiaire d'une membrane pouvant être découpée (19), et une deuxième position dans laquelle elle est au moins partiellement entraînée dans la queue tubulaire (14) ; **caractérisé en ce que**, en combinaison :
i)- ledit siège de réception (15) pour la queue tubulaire (14) est défini par un manchon (28) supporté par une paroi arrière (29) dudit réflecteur (3) de manière à être saillant ;
ii)- lesdites ailettes déformables élastiquement (16) sont pourvues radialement, sur l'extérieur de la queue tubulaire (14), d'éléments saillants (27) conçus pour être ancrés en utilisation sur une paroi latérale (20) dudit siège de réception (15) supporté par le réflecteur (3) ;
iii)- ledit manchon (28) et ladite queue (14) sont constitués d'une matière plastique synthétique moulée, ainsi que lesdits broche (17) et bloc (11), lesdites ailettes (16) de la queue tubulaire étant constituées d'un matériau plus dur que le matériau dudit manchon (28) ;
iv)- ladite broche (17) comporte une première partie d'extrémité (22) et une deuxième partie d'extrémité (23), opposée à la première et de plus grande taille transversalement que la première partie, conçues pour coopérer, dans ladite deuxième position de la broche, avec lesdites ailettes déformables élastiquement (16) de ladite queue tubulaire, à partir de l'intérieur de cette dernière ;
v)- ladite deuxième partie d'extrémité (23) de la broche (17) est pourvue latéralement sur l'extérieur de la broche, c'est-à-dire vers lesdites ailettes de la queue tubulaire, de nervures longitudinales (24) respectives ;
vi)- dans ladite deuxième position de la broche, ladite broche (17) interfère avec les ailettes déformables élastiquement (16) dans une mesure telle que, lorsque la queue est insérée dans le siège de réception (15), les ailettes (16) interfèrent avec la paroi latérale (20) du siège de réception (15) de sorte que ladite deuxième partie d'extrémité (23) de la broche les presse contre la paroi latérale (20) du siège de réception (15) de la queue dans une mesure telle que lesdits éléments saillants (27) des ailettes (16) sont ancrés radialement en utilisation sur la paroi latérale (20) du siège de réception (15).

2. Dispositif selon la revendication 1, **caractérisé en ce que** ladite queue tubulaire (14) et ladite broche (17) sont directement supportées par le bloc (11), alignées axialement l'une avec l'autre et agencées toutes deux pour être coaxiales avec ledit siège sphérique (12) de sorte que l'intérieur de ladite queue tubulaire (14) communique directement avec ledit siège sphérique (12), dans une position immédiatement sous-jacente à celui-ci, au moyen de ladite ouverture (18), et de sorte qu'au moins une partie (22) de ladite broche (17), dans la première position de cette dernière, est logée dans ledit premier siège sphérique (12) de manière à faire saillie axialement dans celui-ci.

3. Dispositif selon la revendication 1 ou 2, **caractérisé en ce que** ladite membrane pouvant être découpée (19) consiste en au moins une partie amincie, par conséquent d'épaisseur réduite, d'une paroi inférieure (21) dudit siège sphérique (12).

4. Dispositif selon la revendication 2 ou 3, **caractérisé en ce que** ladite broche (17) comporte la première partie d'extrémité (22) conçue pour coopérer avec ladite tête sphérique (9) lorsque cette dernière est introduite par pression dans ledit siège sphérique (12).

5. Dispositif selon la revendication 4, **caractérisé en ce que** ladite membrane pouvant être découpée (19) est obtenue en une seule pièce avec ladite broche (17), entre lesdites première et deuxième parties (22 ; 23) de celle-ci.

6. Dispositif selon l'une quelconque des revendications précédentes, **caractérisé en ce que** lesdites ailettes déformables élastiquement (16) formant ladite queue tubulaire sont formées de sorte que, avec les ailettes non déformées, leurs extrémités (25) respectives divergent en porte à faux l'une de l'autre de sorte que les dimensions transversales de ladite queue tubulaire (14) sont, au moins pour une partie de la longueur de la queue, plus grandes que celles du siège de réception (15) supporté par le réflecteur.

7. Dispositif selon l'une quelconque des revendications précédentes, **caractérisé en ce que** lesdites ailettes déformables élastiquement (16) formant ladite queue tubulaire ont leurs extrémités (25) en porte à faux respectives pourvues radialement sur l'intérieur de la queue tubulaire de dents d'arrêt (26) respectives pour ladite broche (17), qui sont conçues pour venir en butée axialement contre la susdite lorsque la broche est dans ladite deuxième position.

8. Dispositif selon la revendication 1, **caractérisé en ce que** ladite queue tubulaire (14) et ladite broche (17) sont supportées par le bloc (11) en porte à faux latéralement à partir de celui-ci, alignées axialement l'une avec l'autre parallèlement à un axe de symétrie (A) du siège sphérique (12), au moyen d'un support (50) obtenu latéralement en une seule pièce avec le bloc (11) de manière à faire saillie de celui-ci.

9. Phare (4) pour des véhicules comprenant un corps de phare (5) sensiblement en forme de coupe et fermé à l'avant par une lentille transparente ou prismatique (7), une source de lumière (8) et un réflecteur (3) pour la source de lumière agencé à l'intérieur du corps de phare et supporté par ce dernier par l'intermédiaire d'au moins trois joints sphériques (2), chacun comprenant une tête sphérique (9) supportée par le corps de phare (5) par l'intermédiaire d'une tige (10) respective, et un bloc (11) supporté intégralement par le réflecteur (3) et pourvu d'un siège sphérique (12) dans celui-ci, conçu pour venir en prise par pression en utilisation avec la tête sphérique (9) ; **caractérisé en ce que** les blocs (11) desdits joints sphériques (2) sont réalisés en tant qu'éléments qui sont distincts du réflecteur (3) et qui sont fixés intégralement à ce dernier au moyen d'un dispositif d'assemblage (1) selon l'une quelconque des revendications précédentes.

10. Véhicule (5) pourvu d'au moins un phare (4) selon la revendication 9.
